# EUROPÄISCHE PATENTSCHRIFT

(11) **EP 3 511 565 B1**
(45) Veröffentlichungstag und Bekanntmachung des Hinweises auf die Patenterteilung: **08.06.2022**
(21) Anmeldenummer: 19151308.4
(22) Anmeldetag: 11.01.2019
(51) Int. Cl.: F03D 7/04

(54) **VERFAHREN UND SYSTEM ZUM STEUERN EINES WINDPARKS**
METHOD AND SYSTEM FOR CONTROLLING A WIND FARM
PROCÉDÉ ET SYSTÈME DE COMMANDE D'UN PARC ÉOLIEN

(30) Priorität: 11.01.2018 DE 102018000160
(43) Veröffentlichungstag der Anmeldung: 17.07.2019
(73) Patentinhaber: Siemens Gamesa Renewable Energy Service GmbH, 20097 Hamburg (DE)
(72) Erfinder: Diering, Markus, 24879 Neuberend (DE); Peter, Markus, 24879 Neuberend (DE)
(74) Vertreter: Glawe, Delfs, Moll

(56) Entgegenhaltungen:
- EP-A1- 2 233 737
- EP-A2- 2 267 302

## Beschreibung

Die Erfindung betrifft ein Verfahren und ein System zum Steuern eines Windparks.

Eine Mehrzahl von Windenergieanlagen kann zu einem Windpark zusammengeschlossen sein, so dass die von den Windenergieanlagen erzeugte elektrische Energie an einem gemeinsamen Übergabepunkt in ein Anschlussnetz eines Netzbetreibers eingespeist werden kann. Ziel ist, dass der Windpark aus der Perspektive des Netzbetreibers wie ein einzelnes Kraftwerk betrachtet werden kann.

Der Windpark umfasst eine übergeordnete Steuerungsebene, die dafür zuständig ist, dass sich an dem Übergabepunkt ein elektrischer Zustand einstellt, der den Vorgaben des Anschlussnetzes entspricht. Auf der übergeordneten Steuerungsebene werden Sensordaten über den Zustand am Übergabepunkt verarbeitet, um daraus Steuervorgaben für die Windparkkomponenten einer untergeordneten Steuerungsebene abzuleiten. Dokument EP 2 267 302 A2 sieht einen einer oberen Regelebene zugeordneten Masterregler und eine Mehrzahl von einer unteren Regelebene zugeordneten Submasterreglern vor. Dokument EP 2 233 737 A1 stellt einen Windpark mit Windenergieanlagen vor, wobei wenigstens zwei der Windenergieanlagen die Leitung des Windparks übernehmen und auf die Betriebsdaten der restlichen Windenergieanlagen zugreifen können.

Der Erfindung liegt die Aufgabe zugrunde, ein Verfahren und ein System zum Steuern eines Windparks vorzustellen, die flexibel verwendet und angepasst werden können. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen Verfahren werden auf einer übergeordneten Steuerungsebene Steuervorgaben für eine Mehrzahl von Windparkkomponenten gemacht. In einer der übergeordneten Steuerungsebene zugeordneten Sensorstation werden Sensordaten aufgenommen. Die Sensordaten werden an eine Windparkkomponente übermittelt. In einem Parkmastermodul der Windparkkomponente werden die Sensordaten verarbeitet, um Steuervorgaben für die Mehrzahl von Windparkkomponenten zu ermitteln.

Die übergeordnete Steuerungsebene wird gemäß der Erfindung in zwei voneinander getrennte Funktionseinheiten aufgeteilt. Die erste Funktionseinheit wird durch die Sensorstation gebildet, die bevorzugt benachbart zu dem Übergabepunkt des Windparks angeordnet ist, so dass die Daten über den elektrischen Zustand am Übergabepunkt direkt gemessen werden können. Die zweite Funktionseinheit wird durch das Parkmastermodul gebildet, das in eine Windparkkomponente integriert ist. Das Parkmastermodul ist damit räumlich einem Element des Windparks zugeordnet, das der untergeordneten Steuerungsebene angehört. Die Erfindung hat erkannt, dass die übergeordnete Steuerung bei einer solchen Gestaltung flexibler verwendet und angepasst werden kann, als wenn die übergeordnete Steuerung als integrierte Einheit (Parkmaster) ausgebildet ist.

Als Windparkkomponente wird allgemein eine Einrichtung des Windparks bezeichnet, mit der auf den elektrischen Zustand am Übergabepunkt Einfluss genommen werden kann. Dazu gehören insbesondere die Windenergieanlagen des Windparks. Weiter dazugehören können beispielsweise Kompensationseinrichtungen für die Blindleistung, schaltbare Windparktransformatoren oder Speicher für elektrische Energie. Die Sensorstation, die Messdaten über den elektrischen Zustand am Übergabepunkt aufnimmt bzw. Kommunikationsaufgaben übernimmt, gehört nicht zu den Windparkkomponenten in diesem Sinne.

Zu den Windparkkomponenten können insbesondere mehrere Windenergieanlagen gehören. Jede Windenergieanlage hat vorzugsweise einen Rotor, der über eine Rotorwelle mit einem Generator gekoppelt ist, um elektrische Energie zu erzeugen. Die von den Windenergieanlagen gemeinsam erzeugte elektrische Energie kann an dem Übergabepunkt in das Anschlussnetz eingespeist werden. Zu dem Windpark können beispielsweise mindestens 10, vorzugsweise mindestens 20, weiter vorzugsweise mindestens 50 Windenergieanlagen gehören. Der Windpark kann weitere Windparkkomponenten umfassen, mit denen Einfluss auf den elektrischen Zustand am Übergabepunkt genommen werden kann. Zu den weiteren Windparkkomponenten können beispielsweise ein Windparktransformator und/oder eine Blindleistungs-Kompensationseinrichtung gehören. Der Windparktransformator kann dazu ausgelegt sein, die Spannung von einer in dem windparkinternen Netz anliegenden mittleren Spannung auf eine in dem Anschlussnetz des Netzbetreibers anliegende höhere Spannung zu transformieren.

Die Windparkkomponenten können eine untere Steuerungsebene umfassen, auf der die Steuervorgaben der oberen Steuerungsebene verarbeitet werden. Dies kann für eine, für mehrere oder für alle Windparkkomponenten gelten. Die Steuereinheiten der unteren Steuerungsebene können voneinander separat sein, so dass jede Steuereinheit ausschließlich Vorgaben macht, die in der betreffenden Windparkkomponente selbst umgesetzt werden.

Die untergeordnete Steuerungsebene eine Windparkkomponente kann einen geschlossenen Regelkreis umfassen, in dem anhand einer Abweichung zwischen einem Istwert und einem Sollwert einer Regelgröße eine Steuervorgabe für eine Stellgröße der Windparckomponente gemacht wird. Ist die Windparkkomponente eine Windenergieanlage, so kann dem geschlossenen Regelkreis beispielsweise der Anstellwinkel der Rotorblätter eingestellt werden, um die Leistungsaufnahme aus dem Wind zu beeinflussen. Möglich ist auch, dass in dem geschlossenen Regelkreis ein Phasenwinkel zwischen Strom und Spannung eingestellt wird, durch den der Anteil an Blindleistung in der eingespeisten Leistung beeinflusst wird. Eine Steuervorgabe der übergeordneten Steuerungsebene kann in dem geschlossenen Regelkreis der unteren Steuerungsebene beispielsweise als geänderter Sollwert und/oder als Vorsteuerwert verwendet werden.

Die Sensorstation kann dazu ausgelegt sein, den elektrischen Zustand am Übergabepunkt zu erfassen. Dazu kann die Sensorstation beispielsweise einen Sensor für die elektrische Spannung, einen Sensor für den elektrischen Strom und/oder einen Sensor für den Phasenwinkel zwischen Strom und Spannung umfassen.

Die Sensorstation kann eine erste Kommunikationsschnittstelle umfassen, über die die Sensorstation Daten von dem Netzbetreiber empfangen kann. Die von dem Netzbetreiber empfangenen Daten können beispielsweise Vorgabewerte umfassen für die elektrische Spannung am Übergabepunkt, für die am Übergabepunkt eingespeiste Leistung und/oder für den Blindleistungsanteil am Übergabepunkt.

Die Sensorstation kann eine zweite Kommunikationsschnittstelle umfassen, über die Daten an die untergeordnete Steuerungsebene gesendet werden können. Die an die untergeordnete Steuerungsebene gesendeten Daten können beispielsweise Sensordaten umfassen, die den elektrischen Zustand am Übergabepunkt repräsentieren. Zusätzlich oder alternativ dazu können die an die untergeordnete Steuerungsebene gesendeten Daten Vorgabedaten umfassen. Die Vorgabedaten können von dem Netzbetreiber empfangene Vorgaben repräsentieren.

Das Parkmastermodul kann eine dritte Kommunikationsschnittstelle umfassen, über die das Parkmastermodul Daten von der Sensorstation umfassen kann. Über die dritte Kommunikationsschnittstelle kann das Parkmastermodul beispielsweise Sensordaten und/oder Vorgabedaten empfangen. Die dritte Kommunikationsschnittstelle des Parkmastermoduls kann räumlich getrennt angeordnet sein von der zweiten Kommunikationsschnittstelle der Sensorstation. Insbesondere kann die dritte Kommunikations-Schnittstelle in einer anderen baulichen Einheit untergebracht sein als die zweite Kommunikationsschnittstelle. Der Abstand zwischen der zweiten Kommunikationsschnittstelle und der dritten Kommunikationsschnittstelle kann beispielsweise größer sein als 100 m, vorzugsweise größer sein als 500 m, weiter vorzugsweise größer sein als 2000 m. Die Datenübertragung zwischen der zweiten Kommunikationsschnittstelle und der dritten Kommunikationsschnittstelle kann beispielsweise über Kabel oder per Funk erfolgen.

Das Parkmastermodul kann dazu ausgelegt sein, über die dritte Kommunikationsschnittstelle empfangene Daten zu verarbeiten, um eine Steuervorgabe für eine Mehrzahl von Windparkkomponenten zu ermitteln. Die Steuervorgaben können beispielsweise Wirkleistungsvorgaben und/oder Blindleistungsvorgaben für mehrere Windenergieanlagen umfassen. Zusätzlich dazu können die Steuervorgaben eine Vorgabe für eine Blindleistungs-kompensationseinrichtung und/oder für einen Windparktransformator umfassen.

Das Parkmastermodul kann eine vierte Kommunikationsschnittstelle umfassen, über die das Parkmastermodul Daten an eine Mehrzahl anderer Windparkkomponenten senden kann. Über die vierte Kommunikationsschnittstelle kann das Parkmastermodul Steuervorgaben an die Mehrzahl anderer Windparkkomponenten senden.

Die übergeordnete Steuerungsebene kann einen geschlossenen Regelkreis umfassen. In dem geschlossenen Regelkreis kann das in der Windparkkomponente angeordnete Parkmastermodul die Funktion des Reglers übernehmen. Das Parkmastermodul kann über die dritte Kommunikationsschnittstelle einen Istwert und/oder einen Sollwert für eine Regelgröße empfangen. Der Istwert kann den von der Sensorstation empfangenen Sensordaten entsprechen. Der Sollwert kann den von der Sensorstation empfangenen Vorgabewerten entsprechen. Anhand einer Abweichung zwischen dem Istwert und dem Sollwert wird eine Steuervorgabe für eine Mehrzahl von Windparkkomponenten ermittelt. Indem die Mehrzahl von Windparkkomponenten die Steuervorgabe umsetzt, wird Einfluss auf den Istwert der Regelgröße genommen. Die Regelgröße kann der elektrische Zustand am Übergabepunkt sein.

Eine oder mehrere der Windparkkomponenten können einen geschlossenen Regelkreis umfassen, der der untergeordneten Steuerungsebene zugeordnet ist. In dem untergeordneten Regelkreis kann die von der übergeordneten Steuerungsebene erhaltene Steuervorgabe als Sollwert bzw. als Vorsteuerwert verarbeitet werden, um eine Vorgabe für ein Stellglied der Windparkkomponente zu ermitteln. Indem das Stellglied gemäß der Vorgabe eingestellt wird, kann Einfluss auf die Regelgröße der untergeordneten Steuerungsebene genommen werden.

Das Parkmastermodul kann ein Element einer Steuereinheit der Windparkkomponente sein. Die Steuereinheit kann ein Bestandteil der untergeordneten Steuerungsebene sein, mit der gemäß Steuervorgaben von der übergeordneten Steuerungsebene Einfluss auf eine Stellgröße der Windparkkomponente genommen wird. Solche Steuereinheiten können als Rechner ausgestaltet sein, auf dem Rechenoperationen durchgeführt werden, um eine Vorgabe für die Stellgröße zu ermitteln. Häufig sind die Rechner so dimensioniert, dass die Rechenkapazität nicht oder nicht dauerhaft vollständig ausgenutzt wird. Die nicht auf der untergeordneten Steuerungsebene benötigte Rechenkapazität kann in Form eines Parkmastermoduls der übergeordneten Steuerungsebene zur Verfügung gestellt werden. Die Rechenkapazität kann der übergeordneten Steuerungsebene fest zur Verfügung gestellt werden oder Abhängigkeit von momentanen Bedingungen, wie beispielsweise der Rechenkapazität, die auf der untergeordneten Steuerungsebene benötigt wird.

Das erfindungsgemäße Verfahren kann so durchgeführt werden, dass die Sensorstation die Daten an eine Mehrzahl von Windparkkomponenten übermittelt. Die Daten können sowohl in einem Parkmastermodul einer ersten Windparkkomponente als auch in einem Parkmastermodul einer zweiten Windparkkomponente verarbeitet werden, um jeweils Steuervorgaben für eine Mehrzahl von Windenergieanlagen zu ermitteln.

Das Verfahren kann insbesondere so durchgeführt werden, dass die Sensorstation die Daten an mehr als zwei Windparkkomponenten übermittelt, beispielsweise an fünf Windparkkomponenten, vorzugsweise an zehn Windparkkomponenten. Ein Teil der Windparckomponenten oder alle Windparkkomponenten können ein Parkmastermodul umfassen, in dem die Daten verarbeitet werden, um Steuervorgaben für eine Mehrzahl von Windparkkomponenten zu machen. Ein erstes Parkmastermodul einer ersten Windparkkomponente kann für eine erste Teilaufgabe der übergeordneten Steuerungsebene zuständig sein, und ein zweites Parkmastermodul einer zweiten Windparkkomponente kann für eine zweite Teilaufgabe der übergeordneten Steuerungsebene zuständig sein. In einer Ausführungsform werden die Teilaufgaben der übergeordneten Steuerungsebene auf mehr als zwei Windparkkomponenten verteilt, beispielsweise auf mindestens fünf Windparkkomponenten, vorzugsweise auf mindestens zehn Windparkkomponenten.

Die Steuervorgaben des ersten Parkmastermoduls können für eine erste Gruppe von Windparkkomponenten bestimmt sein, während die Steuervorgaben des zweiten Parkmastermoduls für eine zweite Gruppe von Windparkkomponenten bestimmt sind. Die erste Gruppe und die zweite Gruppe können überschneidungsfrei sein. Beispielsweise kann die erste Gruppe einem ersten Strang von Windenergieanlagen in dem Windpark entsprechen und die zweite Gruppe einem zweiten Strang von Windenergieanlagen in dem Windpark entsprechen.

Zusätzlich oder alternativ dazu können die Steuervorgaben des ersten Parkmastermoduls sich auf eine andere Größe beziehen als die Steuervorgaben des zweiten Parkmastermoduls. Beispielsweise kann das erste Parkmastermodul dafür zuständig sein, eine Steuervorgabe für den Blindleistungsanteil zu ermitteln, während das zweite Parkmastermodul für die Frequenzregelung in dem Windpark zuständig ist.

Die betreffenden Parkmastermodule können der übergeordneten Steuerungsebene fest zugeordnet sein. Erfindungsgemäß werden die Parkmastermodule abhängig vom Bedarf der übergeordneten Steuerungsebene und/oder abhängig von freien Kapazitäten in Steuereinheiten der unteren Steuerungsebene zu der oberen Steuerungsebene zugeordnet. Erfindungsgemäß ist zu diesem Zweck ein Allokationsmodul vorgesehen sein, das von den Windparkkomponenten über freie Kapazitäten der Steuereinheiten der untergeordneten Steuerungsebene informiert wird und/oder das von der übergeordneten Steuerungsebene über den Bedarf an Parkmastermodulen informiert wird. Das Allokationsmodul ist dazu ausgelegt, abhängig von solchen Informationen, Kapazitäten von Steuereinheiten der untergeordneten Steuerungsebene zu der oberen Steuerungsebene zuzuordnen.

Die Erfindung betrifft außerdem ein System zum Steuern eines Windparks mit einer übergeordneten Steuerungsebene, die dazu ausgelegt ist, Steuervorgaben für eine Mehrzahl von Windparkkomponenten zu machen. Die obere Steuerungsebene umfasst eine Sensorstation, die dazu ausgelegt ist, Sensordaten zu einer Windparkkomponente zu senden.

Die Sensordaten werden in einem Parkmastermodul der Windparkkomponente verarbeitet, um Steuervorgaben für eine Mehrzahl von Windparkkomponenten zu ermitteln. Das System umfasst ein Allokationsmodul. Die Erfindung betrifft außerdem einen mit einem solchen Steuerungssystem ausgestatteten Windpark.

Das Steuerungssystem kann mit weiteren Merkmalen fortgebildet werden, die im Zusammenhang des erfindungsgemäßen Verfahrens beschrieben sind. Das Verfahren kann mit weiteren Merkmalen beschrieben werden, die im Zusammenhang des erfindungsgemäßen Steuerungssystems beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung eines erfindungsgemäßen Windparks;
- Fig. 2:: eine Windenergieanlage eines erfindungsgemäßen Windparks;
- Fig. 3:: eine schematische Darstellung eines erfindungsgemäßen Steuerungssys-tems.

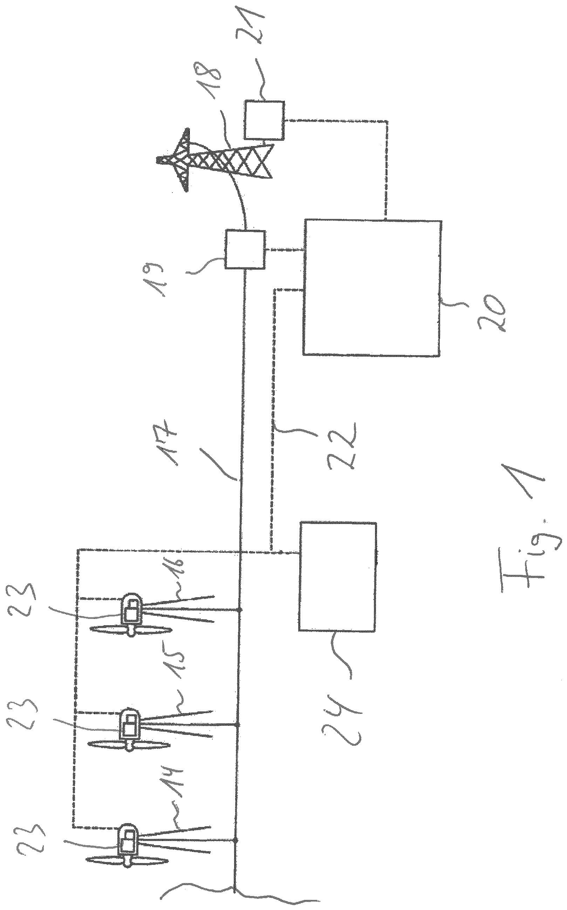

Ein Windpark umfasst eine größere Anzahl von Windenergieanlagen, von denen in Fig. 1 drei Windenergieanlagen 14, 15, 16 beispielhaft dargestellt sind. Die Windenergieanlagen 14, 15, 16 umfassen jeweils einen Rotor, der durch den Wind in Drehung versetzt wird und einen Generator antreibt. Die von den Windenergieanlagen 14, 15, 16 erzeugte elektrische Energie wird über ein windparkinternes Netz zu einem Anschlussnetz 18 eines Netzbetreibers geleitet. An einem Übergabepunkt 19 wird die elektrische Energie von dem windparkinternen Netz 17 an das Anschlussnetz 18 übergeben.

Der Windpark hat eine übergeordnete Steuerungsebene, die den Betrieb der Windenergieanlagen 14, 15, 16 so steuert, dass der Windpark aus Perspektive des Anschlussnetzes 18 als einheitliches Kraftwerk betrachtet werden kann. Zu der übergeordneten Steuerungsebene gehört eine Sensorstation 20, die mit geeigneten Sensoren Informationen über den elektrischen Zustand am Übergabepunkt 19 aufnimmt. Die Sensorstation 20 ist eine bauliche Einheit, die benachbart zu dem Übergabepunkt 19 angeordnet ist, so dass die Sensorstation 20 direkt Messwerte über den elektrischen Zustand am Übergabepunkt 19 aufnehmen kann. Außerdem empfängt die Sensorstation 20 Vorgaben von einer Zentrale 21 des Anschlussnetzes 18. Die Vorgaben von der Zentrale 21 können sich beispielsweise auf die am Übergabepunkt 19 einzuspeisende Leistung oder auf die Spannung am Übergabepunkt 19 beziehen.

Von der Sensorstation 20 werden die Informationen zum elektrischen Zustand am Übergabepunkt 19 sowie die Vorgaben von der Zentrale 21 über eine Datenleitung 22 zu den Steuereinheiten 23 der Windenergieanlagen 14, 15, 16 geleitet. An die Datenleitung 22 ist außerdem ein Allokationsmodul 24 angeschlossen. Das Allokationsmodul 24 fragt bei den Steuereinheiten 23 der Windenergieanlagen 14, 15, 16 laufend den aktuellen Stand an freier Rechenkapazität ab. Abhängig vom Bedarf an Rechenleistung der übergeordneten Steuerungsebene werden Teile der Steuereinheiten 23 der Windenergieanlagen 14, 15, 16 der übergeordneten Steuerungsebene als Parkmastermodul 25 zugeordnet.

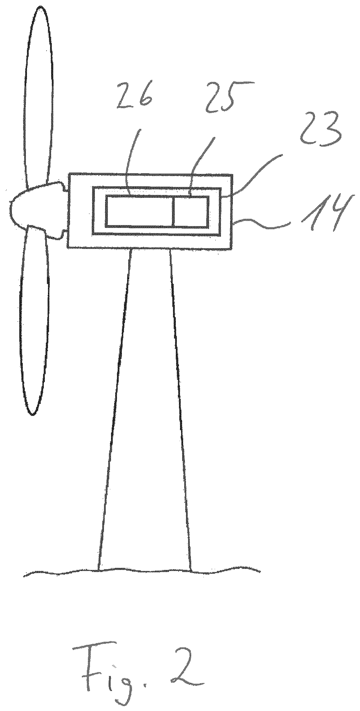

Gemäß der vergrößerten Darstellung der Windenergieanlage 14 in Fig. 2 ist die Steuereinheit 23 der Windenergieanlage 14 in zwei funktionelle Einheiten unterteilt. Eine Einheit 26 ist der untergeordneten Steuerungsebene zugeordnet und ist zuständig für die Steuerung der Windenergieanlage 14. Die zweite Einheit ist als Parkmastermodul 25 der oberen Steuerungsebene zugeordnet, die für die Steuerung des Windparks zuständig ist.

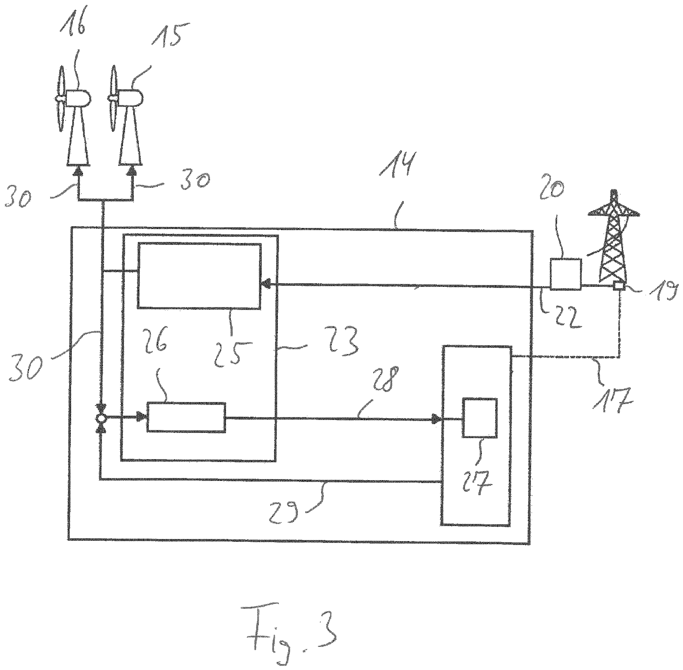

Das Steuerungssystem des Windparks umfasst gemäß der schematischen Darstellung in Fig. 3 einen geschlossenen Regelkreis auf der übergeordneten Steuerungsebene und einen geschlossenen Regelkreis auf der untergeordneten Steuerungsebene. Am Beispiel der Windenergieanlage 14 wirkt die der untergeordneten Steuerungsebene zugeordnete Einheit 26 der Steuerungseinheit 23 als Regler für die Leistung der Windenergieanlage 14. Der Regler 26 macht dem Pitchsystem 27 eine Vorgabe 28, gemäß der das Pitchsystem 27 den Anstellwinkel der Rotorblätter einstellt. Zurückgemeldet an den Eingang des Reglers 26 wird ein Istwert 29 der von der Windenergieanlage 14 erzeugten elektrischen Leistung. Der Istwert 29 der Leistung wird verglichen mit einem Sollwert, den die untergeordnete Steuerungsebene von der übergeordneten Steuerungsebene als Steuervorgabe 30 für die Leistung erhält.

Auf der übergeordneten Steuerungsebene empfängt das in der Steuereinheit 23 der Windenergieanlage 14 angeordnete Parkmastermodul 25 von der Sensorstation 20 einen Istwert und einen Sollwert für die elektrische Frequenz am Übergabepunkt 19. Der Sollwert wird von der Zentrale 21 des Anschlussnetzes 18 vorgegeben. Den Istwert misst die Sensorstation am Übergabepunkt 19. Aus einer Differenz zwischen dem Istwert und dem Sollwert leitet das Parkmastermodul 25 eine Steuervorgabe 30 für die Leistung der Windenergieanlagen 14, 15, 16 ab.

Die Steuervorgabe 30 wird an den in derselben Steuereinheit 23 angeordneten Regler 26 geleitet. In gleicher Weise wird auch den anderen Windenergieanlagen 15, 16 des Windparks eine Steuervorgabe für die Leistung gemacht. Die anderen Windenergieanlagen 15, 16 haben ihrerseits geschlossene Regelkreise auf der untergeordneten Steuerungsebene, in denen die Steuervorgabe 30 als Sollwert verarbeitet wird. Indem die Windenergieanlagen 14, 15, 16 elektrische Energie in das windparkinterne Netz 17 einspeisen, nehmen sie Einfluss auf den elektrischen Zustand am Übergabepunkt 20. Damit ergibt sich auch auf der übergeordneten Steuerungsebene eingeschlossen Regelkreis.

Auf entsprechende Weise wird auch ein Teil der Rechenkapazitäten der Steuereinheiten 23 der anderen Windenergieanlagen 15, 16 der übergeordneten Steuerungsebene als Parkmastermodul 25 zugeordnet. In diesen Parkmastermodulen 25 können andere Teilaufgaben der übergeordneten Steuerungsebene erledigt werden. Beispielsweise kann das Parkmastermodul 25 der Windenergieanlage 15 sich mit der Regelung des Blindleistungsanteils befassen. Das Parkmastermodul 25 der Windenergieanlage 16 kann für die Bereitstellung einer Sekundenreserve durch den Windpark zuständig sein.

## Patentansprüche

1. Verfahren zum Steuern eines Windparks, bei dem auf einer übergeordneten Steuerungsebene (20, 25) Steuervorgaben (30) für eine Mehrzahl von Windparkkomponenten (14, 15, 16) gemacht werden, mit folgenden Schritte:
a. Aufnehmen von Sensordaten in einer der übergeordneten Steuerungsebene (20, 25) zugeordneten Sensorstation (20);
b. Übermitteln der Sensordaten an eine Windparkkomponente (14, 15, 16);
c. Verarbeiten der Sensordaten in einem Parkmastermodul (25) der Windparkkomponente (14, 15, 16), um Steuervorgaben (30) für die Mehrzahl von Windparkkomponenten (14, 15, 16) zu ermitteln,
**gekennzeichnet durch** ein Allokationsmodul (24), mit dem abhängig vom Bedarf der übergeordneten Steuerungsebene und/oder abhängig von freien Kapazitäten der unteren Steuerungsebene Kapazitäten der Steuereinheiten (23) der Windparckomponenten (14, 15, 16) der oberen Steuerungsebene als Parkmastermodule (25) zugeordnet werden.

2. Verfahren nach Anspruch 1, **dadurch gekennzeichnet, dass** zu den Windparkkomponenten eine Mehrzahl von Windenergieanlagen (14, 15, 16) gehört.

3. Verfahren nach Anspruch 1 oder 2, **dadurch gekennzeichnet, dass** die Sensorstation (20) benachbart zu einem Übergabepunkt (19) zwischen einem windparkinternen Netz (17) und einem Anschlussnetz (18) angeordnet ist.

4. Verfahren nach einem der Ansprüche 1 bis 3, **dadurch gekennzeichnet, dass** die Sensorstation (20) den elektrischen Zustand am Übergabepunkt (19) erfasst.

5. Verfahren nach einem der Ansprüche 1 bis 4, **dadurch gekennzeichnet, dass** die Sensordaten von der Sensorstation (20) an eine Mehrzahl von Windparkkomponenten (14, 15, 16) übermittelt werden.

6. Verfahren nach einem der Ansprüche 1 bis 5, **dadurch gekennzeichnet, dass** die Windparkkomponenten (14, 15, 16) eine untergeordnete Steuerungsebene (26, 28, 29) umfassen, auf der Steuervorgaben (30) der oberen Steuerungsebene (20, 25) verarbeitet werden.

7. Verfahren nach Anspruch 6, **dadurch gekennzeichnet, dass** die untergeordnete Steuerungsebene (26, 28, 29) einen geschlossenen Regelkreis umfasst.

8. Verfahren nach einem der Ansprüche 1 bis 7, **dadurch gekennzeichnet, dass** die obere Steuerungsebene (20, 25) einen geschlossenen Regelkreis umfasst.

9. Verfahren nach einem der Ansprüche 1 bis 8, **dadurch gekennzeichnet, dass** das Parkmastermodul (25) ein Element einer Steuereinheit (23) einer Windparkkomponente (14, 15, 16) ist.

10. Verfahren nach einem der Ansprüche 1 bis 9, **dadurch gekennzeichnet, dass** ein erstes Parkmastermodul (25) einer ersten Windparkkomponente (14, 15, 16) für eine erste Teilaufgabe der übergeordneten Steuerungsebene (20, 25) zuständig ist und dass ein zweites Parkmastermodul (25) einer zweiten Windparkkomponente (14, 15, 16) für eine zweite Teilaufgabe der übergeordneten Steuerungsebene (20, 25) zuständig ist.

11. Windparksteuerung mit einer übergeordneten Steuerungsebene (20, 25), die dazu ausgelegt ist, Steuervorgaben (30) für eine Mehrzahl von Windparkkomponenten (14, 15, 16) zu machen, wobei die obere Steuerungsebene (20, 25) eine Sensorstation umfasst, die dazu ausgelegt ist, Sensordaten zu einer Windparkkomponente (14, 15, 16) zu senden, wobei die Sensordaten in einem Parkmastermodul (25) der Windparkkomponente (14, 15, 16) verarbeitet werden, um Steuervorgaben (30) für eine Mehrzahl von Windparkkomponenten (14, 15, 16) zu ermitteln, **gekennzeichnet durch** ein Allokationsmodul (24), mit dem abhängig vom Bedarf der übergeordneten Steuerungsebene und/oder abhängig von freien Kapazitäten der unteren Steuerungsebene Kapazitäten der Steuereinheiten (23) der Windparkkomponenten (14, 15, 16)) der oberen Steuerungsebene als Parkmastermodule (25) zugeordnet werden.

## Claims

1. Method for controlling a wind farm, in which control presets (30) for a plurality of wind farm components (14, 15, 16) are made on a superordinate control level (20, 25), said method having the following steps:
a. recording sensor data in a sensor station (20) that is assigned to the superordinate control level (20, 25);
b. transmitting the sensor data to a wind farm component (14, 15, 16);
c. processing the sensor data in a park master module (25) of the wind farm component (14, 15, 16) in order to identify control presets (30) for the plurality of wind farm components (14, 15, 16),
**characterized by** an allocation module (24), by means of which capacities of the control units (23) of the wind farm components (14, 15, 16) are assigned to the upper control level as park master modules (25) on the basis of the demand of the superordinate control level and/or on the basis of free capacities of the lower control level.

2. Method according to Claim 1, **characterized in that** the wind farm components include a plurality of wind energy installations (14, 15, 16).

3. Method according to Claim 1 or 2, **characterized in that** the sensor station (20) is arranged adjacent to a transfer point (19) between a grid (17) that is internal to the wind farm and a connection grid (18).

4. Method according to one of Claims 1 to 3, **characterized in that** the sensor station (20) detects the electrical state at the transfer point (19).

5. Method according to one of Claims 1 to 4, **characterized in that** the sensor data from the sensor station (20) are transmitted to a plurality of wind farm components (14, 15, 16).

6. Method according to one of Claims 1 to 5, **characterized in that** the wind farm components (14, 15, 16) comprise a subordinate control level (26, 28, 29), on which control presets (30) of the upper control level (20, 25) are processed.

7. Method according to Claim 6, **characterized in that** the subordinate control level (26, 28, 29) comprises a closed control loop.

8. Method according to one of Claims 1 to 7, **characterized in that** the upper control level (20, 25) comprises a closed control loop.

9. Method according to one of Claims 1 to 8, **characterized in that** the park master module (25) is an element of a control unit (23) of a wind farm component (14, 15, 16).

10. Method according to one of Claims 1 to 9, **characterized in that** a first park master module (25) of a first wind farm component (14, 15, 16) is responsible for a first subtask of the superordinate control level (20, 25) and **in that** a second park master module (25) of a second wind farm component (14, 15, 16) is responsible for a second subtask of the superordinate control level (20, 25).

11. Wind farm control system having a superordinate control level (20, 25), which is designed to make control presets (30) for a plurality of wind farm components (14, 15, 16), wherein the upper control level (20, 25) comprises a sensor station, which is designed to transmit sensor data to a wind farm component (14, 15, 16), wherein the sensor data are processed in a park master module (25) of the wind farm component (14, 15, 16) in order to identify control presets (30) for a plurality of wind farm components (14, 15, 16), **characterized by** an allocation module (24), by means of which capacities of the control units (23) of the wind farm components (14, 15, 16) are assigned to the upper control level as park master modules (25) on the basis of the demand of the superordinate control level and/or on the basis of free capacities of the lower control level.

## Revendications

1. Procédé de commande d'un parc éolien lors duquel des spécifications de commande (30) destinées à une pluralité de composants de parc éolien (14, 15, 16) sont établies à un niveau de commande supérieur (20, 25), le procédé comprenant les étapes suivantes :
a. recevoir des données de capteur dans une station de capteur (20) associée au niveau de commande supérieur (20, 25) ;
b. transmettre les données de capteur à un composant de parc éolien (14, 15, 16) ;
c. traiter les données de capteur dans un module de parc maître (25) du composant de parc éolien (14, 15, 16) afin de déterminer des spécifications de commande (30) destinées à la pluralité de composants de parc éolien (14, 15, 16),
**caractérisé par** un module d'allocation (24) auquel des capacités des unités de commande (23) des composants de parc éolien (14, 15, 16) du niveau de commande supérieur sont associées en tant que modules de parc maîtres (25) en fonction des exigences du niveau de commande supérieur et/ou en fonction des capacités libres du niveau de commande inférieur.

2. Procédé selon la revendication 1, **caractérisé en ce que** les composants de parc éolien comprennent une pluralité d'installations éoliennes (14, 15, 16).

3. Procédé selon la revendication 1 ou 2, **caractérisé en ce que** la station de capteur (20) est disposée à côté d'un point de transfert (19) entre un réseau (17) interne au parc éolien et un réseau de raccordement (18).

4. Procédé selon l'une des revendications 1 à 3, **caractérisé en ce que** la station de capteur (20) détecte l'état électrique au point de transfert (19).

5. Procédé selon l'une des revendications 1 à 4, **caractérisé en ce que** les données de capteur de la station de capteur (20) sont transmises à une pluralité de composants de parc éolien (14, 15, 16).

6. Procédé selon l'une des revendications 1 à 5, **caractérisé en ce que** les composants de parc éolien (14, 15, 16) comprennent un niveau de commande inférieur (26, 28, 29) auquel les spécifications de commande (30) du niveau de commande supérieur (20, 25) sont traités.

7. Procédé selon la revendication 6, **caractérisé en ce que** le niveau de commande inférieur (26, 28, 29) comprend une boucle de régulation fermée.

8. Procédé selon l'une des revendications 1 à 7, **caractérisé en ce que** le niveau de régulation supérieur (20, 25) comprend une boucle de régulation fermée.

9. Procédé selon l'une des revendications 1 à 8, **caractérisé en ce que** le module de parc maître (25) est un élément d'une unité de commande (23) d'un composant de parc éolien (14, 15, 16) .

10. Procédé selon l'une des revendications 1 à 9, **caractérisé en ce qu'**un premier module de parc maître (25) d'un premier composant de parc éolien (14, 15, 16) est responsable d'une première sous-tâche du niveau de commande supérieur (20, 25) et **en ce qu'**un deuxième module de parc maître (25) d'un deuxième composant de parc éolien (14, 15, 16) est responsable d'une deuxième sous-tâche du niveau de commande supérieur (20, 25) .

11. Commande de parc éolien comprenant un niveau de commande supérieur (20, 25) qui est conçu pour établir des spécifications de commande (30) destinées à une pluralité de composants de parc éolien (14, 15, 16), le niveau de commande supérieur (20, 25) comprenant une station de capteur, conçue pour envoyer des données de capteur à un composant de parc éolien (14, 15, 16), les données de capteur étant traitées dans un module de parc maître (25) du composant de parc éolien (14, 15, 16) afin de déterminer des spécifications de commande (30) destinées à une pluralité de composants de parc éolien (14, 15, 16), **caractérisée par** un module d'allocation (24) auquel des capacités des unités de commande (23) des composants de parc éolien (14, 15, 16) du niveau de commande supérieur sont associées en tant que modules de parc maîtres (25) en fonction des exigences du niveau de commande supérieur et/ou en fonction des capacités libres du niveau de commande inférieur.
